# FASCICULE DE BREVET EUROPEEN

(11) **EP 2 723 607 B1**
(45) Date de publication et mention de la délivrance du brevet: **01.07.2015**
(21) Numéro de dépôt: 12731528.1
(22) Date de dépôt: 22.05.2012
(51) Int. Cl.: B60N 2/44, B60N 2/01, B60N 2/30

(54) **VEHICULE AUTOMOBILE A SIEGES RABATTABLES**
KRAFTFAHRZEUG MIT ZUSAMMENKLAPPBAREN SITZEN
MOTOR VEHICLE HAVING FOLDING SEATS

(30) Priorité: 21.06.2011 FR 1101916
(43) Date de publication de la demande: 30.04.2014
(73) Titulaire: Renault S.A.S., 92100 Boulogne-Billancourt (FR)
(72) Inventeur: MARTEL, Michel, F-78150 Le Chesnay (FR); MERCIER, Cedric, F-91830 Le Coudray Montceaux (FR); PEREZ, Jean- Claude, F-78450 Villepreux (FR)
(86) Numéro de dépôt international: PCT/FR2012/051133
(87) Numéro de publication internationale: WO 2012/175832

(56) Documents cités:
- US-B1- 7 762 604

## Description

### DOMAINE TECHNIQUE AUQUEL SE RAPPORTE L'INVENTION

La présente invention concerne de manière générale le domaine automobile.

Elle concerne plus particulièrement un véhicule automobile comportant un châssis sur lequel sont montées trois rangées de sièges, avec :
- au moins un siège avant de première rangée,
- au moins un siège intermédiaire de seconde rangée qui est adapté à être replié et qui est monté mobile sur le châssis entre une position d'utilisation et une position de stockage dans laquelle il est replié et rabattu contre le siège avant, et
- au moins un siège arrière de troisième rangée qui est adapté à être replié et qui est dissociable du châssis.

### ARRIERE-PLAN TECHNOLOGIQUE

Les véhicules à trois rangées de sièges sont bien entendu conçus pour embarquer un nombre important de passagers. Ils sont généralement aussi conçus pour convoyer des objets encombrants.

On connaît à cet effet un véhicule automobile du type précité, dans lequel les sièges de la troisième rangée sont escamotables pour pouvoir être extraits du coffre, et dans lequel les sièges du rang intermédiaire sont rabattables contre les sièges de la première rangée afin de libérer un espace maximum dans le coffre.

L'inconvénient majeur de ce type de véhicule est alors que le conducteur, après avoir convoyé ses objets encombrants, est forcé de revenir à son point de départ pour récupérer ses sièges arrière.

Il pourrait bien entendu, lors du convoyage de ses objets encombrants, conserver les sièges de la troisième rangée dans son coffre, en les couchant au fond du coffre. Voir US-A-7762604.

Cette solution ne permettrait toutefois pas d'optimiser le volume de chargement du coffre.

En outre, par mesure de sécurité, le conducteur serait alors contraint de fixer les sièges arrière afin d'éviter qu'ils ne bougent en cas d'accident, ce qui s'avérerait difficile, et ce qui nécessiterait un matériel adéquat.

### OBJET DE L'INVENTION

Afin de remédier aux inconvénients précités de l'état de la technique, la présente invention propose un véhicule automobile dans lequel chaque siège de la troisième rangée est conçu pour se fixer facilement dans le coffre, en une position qui permette d'optimiser le volume de chargement du coffre.

Plus particulièrement, on propose selon l'invention un véhicule automobile tel que défini dans l'introduction, dans lequel il est prévu des moyens d'arrimage pour bloquer le siège arrière de troisième rangée contre le siège intermédiaire de seconde rangée lorsque le siège arrière de troisième rangée est replié et dissocié du châssis et que le siège intermédiaire de seconde rangée est en position de stockage.

Ainsi, les moyens d'arrimage prévus dans le coffre permettent au conducteur de disposer à tout moment du matériel nécessaire pour fixer les sièges de la troisième rangée dans une position peu encombrante.

La position de stockage des sièges de la seconde rangée et de la troisième rangée contre les sièges de la première rangée permet en effet d'optimiser le volume de chargement du coffre.

Les moyens d'arrimage permettent d'ailleurs non seulement de retenir les sièges de la troisième rangée en position de stockage, mais également ceux de la seconde rangée qui sont alors pris en sandwich entre les sièges de la première rangée et ceux de la troisième rangée.

La mise en place des sièges de la troisième rangée contre les sièges de la seconde rangée est par ailleurs aisée, puisqu'il suffit pour cela de les faire basculer vers l'avant, au moyen d'une simple culbute.

Enfin, grâce à l'invention, les moyens d'arrimage sont spécifiquement dimensionnés pour maintenir les sièges de la troisième rangée en cas d'accident, au bénéfice de la sécurité de l'ensemble.

D'autres caractéristiques avantageuses et non limitatives du véhicule automobile conforme à l'invention sont les suivantes :
- les moyens d'arrimage sont agencés pour bloquer le siège arrière contre le siège intermédiaire en position tête-bêche, assise contre assise ;
- les moyens d'arrimage du siège arrière comprennent des premiers moyens d'assujettissement du siège arrière au siège intermédiaire et des seconds moyens d'assujettissement du siège arrière au siège avant de première rangée ;

- lesdits premiers moyens d'assujettissement comportent au moins un crochet ;
- le siège intermédiaire et le siège arrière comprenant chacun une assise et un dossier reliés par des moyens de charnière, ledit crochet est fixé aux moyens de charnière du siège arrière et est adapté à crocheter une partie correspondante de l'assise du siège intermédiaire ;
- le siège intermédiaire comprenant des moyens de pivot pour être rabattu en position de stockage, ladite partie correspondante de l'assise du siège intermédiaire appartient auxdits moyens de pivot ;
- lesdits seconds moyens d'assujettissement comportent au moins une sangle ;
- ledit siège avant étant équipé d'un appui-tête, ladite sangle présente une extrémité fixe qui est fixée au cadre du siège arrière, et une extrémité libre qui est adaptée à être fixée à l'appui-tête du siège avant ;
- la rangée avant comportant deux sièges avant et la rangée arrière comportant deux sièges arrière équipés chacun d'un appui-tête, ladite sangle présente une longueur telle qu'elle est adaptée à enceindre fermement les appui-têtes des sièges arrière lorsque ses deux extrémités sont fixées aux deux appui-têtes des sièges avant ;
- le siège arrière comprenant une assise et un dossier reliés par des moyens de charnière et le siège intermédiaire comprenant des moyens de pivot pour être rabattu en position de stockage, lesdits premiers moyens d'assujettissement comportent au moins une seconde sangle qui présente une longueur telle qu'elle est adaptée à enceindre fermement la charnière du siège arrière et une partie des moyens de pivot du siège intermédiaire pour les bloquer ensemble.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- les figures 1 à 6 sont des vues schématiques des sièges du véhicule automobile selon l'invention, illustrant les différentes étapes de mise en position de stockage de ces sièges,
- la figure 7 est une vue schématique en perspective des sièges du véhicule automobile de la figure 1, représentés en position de stockage,
- les figures 8 à 10 sont des vues de détails des moyens d'arrimage des sièges du véhicule automobile de la figure 7,
- la figure 11 est une vue schématique en perspective des sièges d'une variante de réalisation du véhicule automobile de la figure 1, représentés en position de stockage, et
- les figures 12 et 13 sont des vues de détails des moyens d'arrimage des sièges du véhicule automobile de la figure 11.

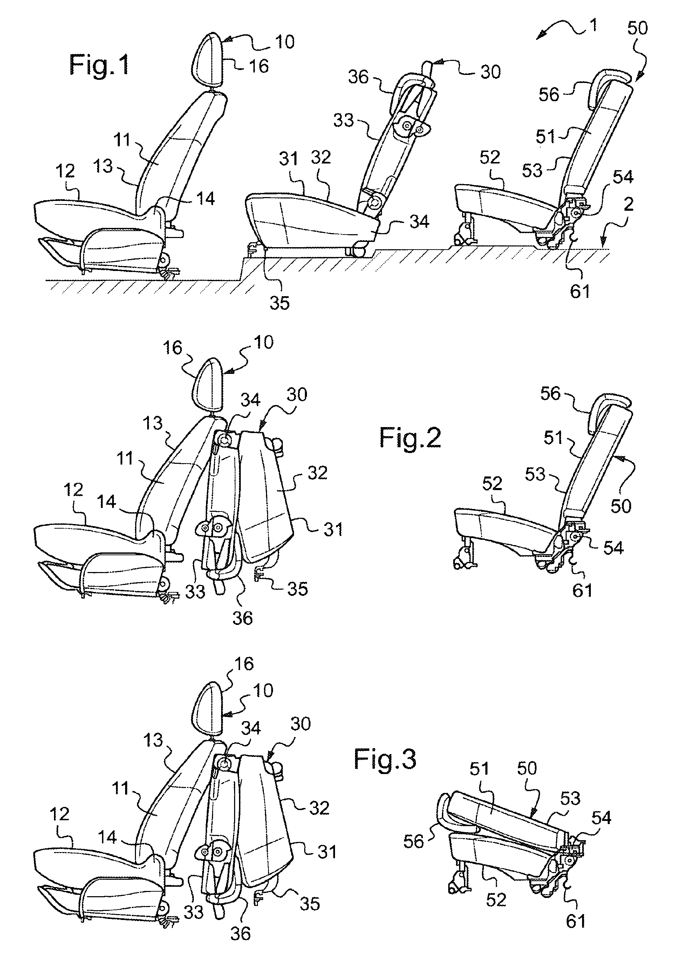

Sur la figure 1, on a représenté schématiquement un châssis 2 et des sièges 11, 31, 51 d'un véhicule automobile 1. Le châssis 2 présente une forme classique, avec une extrémité située du côté du capot du véhicule et une extrémité opposée située du côté du coffre du véhicule.

Dans la suite de la description, les termes « avant » et « arrière » désigneront alors respectivement le lieu situé du côté du capot et celui situé du côté du coffre de ce véhicule automobile 1.

Sur cette figure 1, les sièges 11, 31, 51 sont représentés en position d'utilisation, c'est-à-dire dans une position permettant à un passager de s'y asseoir.

Ils sont montés sur le châssis 2 sur trois rangées 10, 30, 50.

On distingue alors une première rangée 10 comportant au moins un siège avant 11, une troisième rangée 50 comportant au moins un siège arrière 51, et une seconde rangée 30, située entre les première et troisième rangées 10, 50, qui comporte au moins un siège intermédiaire 31.

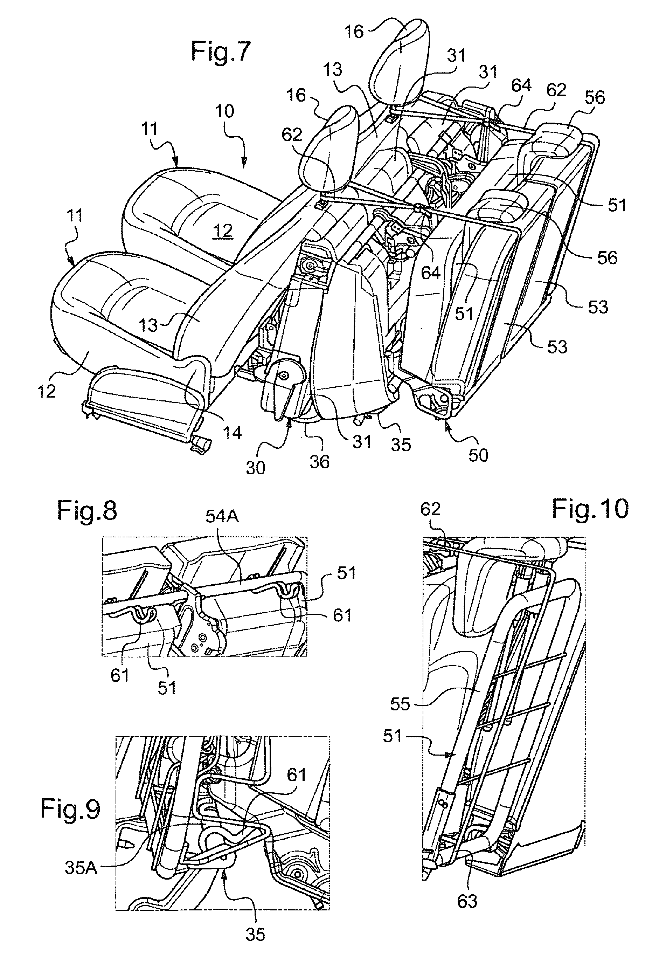

Comme le montre mieux la figure 7, il est plus précisément ici prévu deux sièges avant 11 distincts, deux sièges arrière 51 unis pour former ensemble une banquette arrière, et trois sièges intermédiaire 31 dont deux sont unis et dont un troisième est distinct des deux premiers.

Tel que représenté sur la figure 1, chaque siège 11, 31, 51 comporte ici une assise 12, 32, 52 et un dossier 13, 33, 53 liés ensemble par des moyens de charnière 14, 34, 54, ainsi qu'un appui-tête 16, 36, 56 ajustable en hauteur.

Les moyens de charnière 14 des sièges avant 11 permettent de régler l'inclinaison des dossiers 13 par rapport aux assises 12.

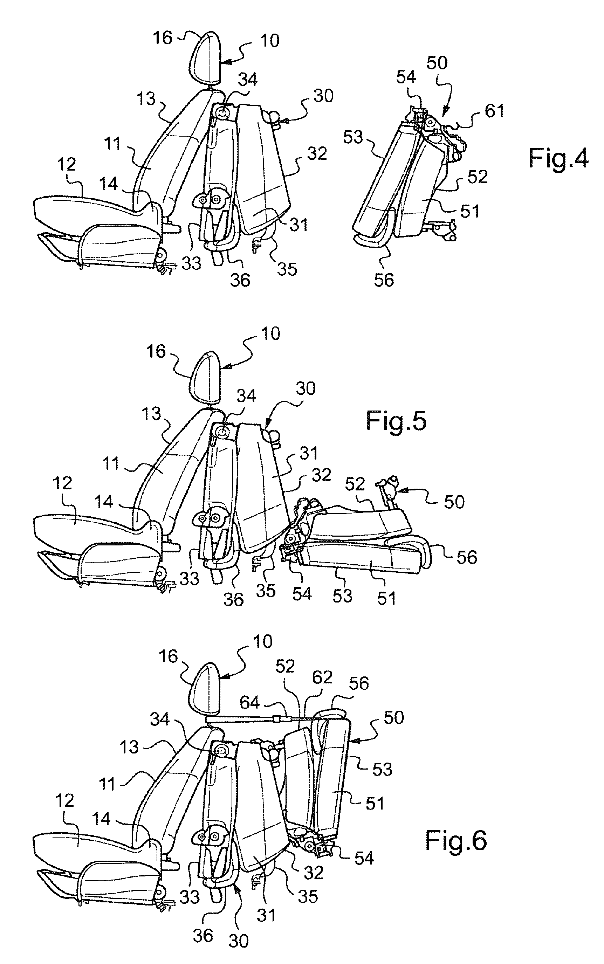

Les moyens de charnière 34, 54 des sièges intermédiaire 31 et des sièges arrière 51 permettent quant à eux de replier les dossiers 33, 53 sur les assises 32, 52, en portefeuille (voir figure 4), afin de libérer de l'espace dans le coffre du véhicule automobile 1.

Les sièges intermédiaire 31 sont montés mobile en basculement sur le châssis 2, à l'aide de moyens de pivot 35, afin de pouvoir être rabattus en position de stockage, dite « position de cinéma », contre les sièges avant 11 (voir figure 2).

Les sièges arrière 51 sont dissociables du châssis 2. Ils comportent à cet effet des moyens de verrouillage pour bloquer et débloquer à volonté les assises 52 relativement au châssis 2, préférentiellement sans outil, afin de libérer de l'espace dans le coffre du véhicule automobile 1.

Selon une caractéristique particulièrement avantageuse de l'invention, il est prévu des moyens d'arrimage 61, 62 ; 72 pour, lorsque les sièges arrière 51 ont été repliés et dissociés du châssis 2, les bloquer contre les sièges intermédiaire 31 après que ces derniers ont été placés en position de stockage.

Sur les figures 7 à 10 d'une part, et 11 à 13 d'autre part, on a représenté deux modes de réalisation de ces moyens d'arrimage.

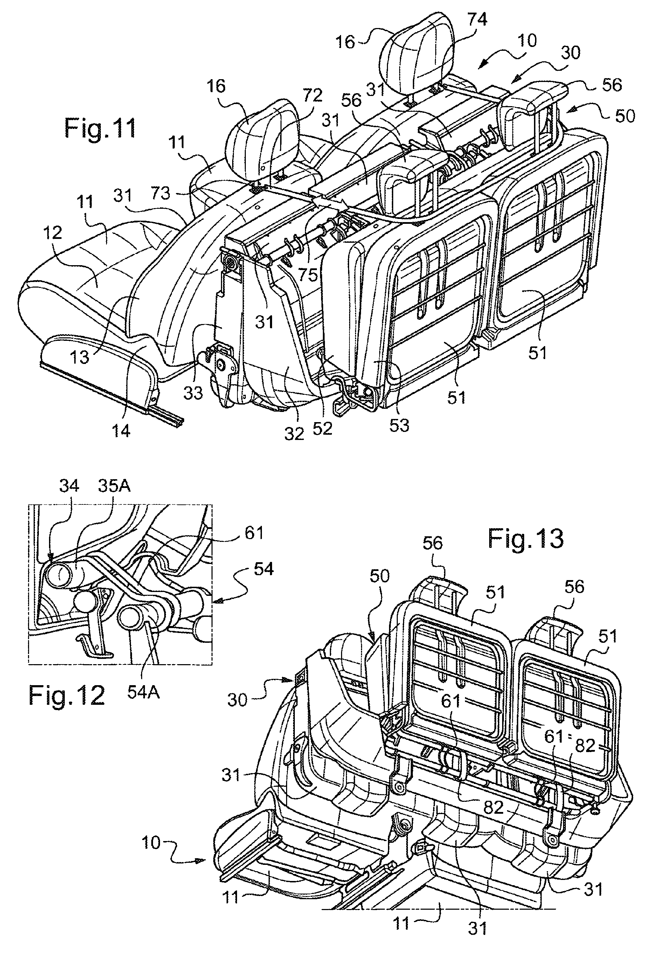

Comme le montrent les figures 7 et 11, dans ces deux modes de réalisation, les moyens d'arrimage sont agencés pour bloquer les sièges arrière 51 contre les sièges intermédiaire 31, en position tête-bêche, de telle manière que les faces inférieures de leurs assises 32, 52 s'appliquent l'une contre l'autre.

Ils sont plus précisément conçus pour bloquer les sièges arrière 51 contre les sièges intermédiaire 31 de telle manière que les appui-têtes 56 des deux sièges arrière 31 se trouvent respectivement positionnés derrière les appui-têtes 16 des deux sièges avant 11, à une distance de ceux-ci inférieure à un mètre.

Pour cela, les moyens d'arrimage comprennent des premiers moyens d'assujettissement 61 pour assujettir les sièges arrière 51 aux sièges intermédiaire 31 (voir figure 8) et des seconds moyens d'assujettissement 62 pour assujettir les sièges arrière 51 aux sièges avant 11 (voir figure 7).

En étant ainsi assujettis, les sièges avant 11 et les sièges arrière 51 prennent les sièges intermédiaire 31 en sandwich et les retiennent en position de stockage.

Avantageusement, dans les deux modes de réalisation représentés sur les figures, les premiers moyens d'assujettissement comportent au moins un crochet 61.

Comme le montre bien la figure 8, les premiers moyens d'assujettissement comportent ici deux crochets 61 identiques, qui sont fixés aux sièges arrière 51 de telle manière que, lorsque les sièges arrière 51 sont en position d'utilisation (figure 1), ils font saillie vers l'arrière et vers le bas du châssis 2.

Comme le montre cette figure 8, ces crochets 61 sont identiques et sont constitués par des tiges repliées en U de manière à présenter deux branches parallèles proches l'une de l'autre.

L'une dés extrémités de chaque crochet 61, celle située du côté des extrémités libres des branches du U, est alors recourbée afin d'être soudée sur un axe 54A appartenant aux moyens de charnière 54 des sièges arrière 51.

L'autre des extrémités de chaque crochet 61, celle située du côté de la base du U, est aussi recourbée afin de permettre au crochet 61 de pouvoir crocheter une partie correspondante des sièges intermédiaire 31.

En pratique, pour crocheter cette partie correspondante des sièges intermédiaire 31, il faut commencer par replier puis rabattre ces sièges intermédiaire 31 en position de stockage (figure 2).

Il faut ensuite replier les sièges arrière 51 en portefeuille puis les dissocier du châssis 2 (figure 3) en manoeuvrant leurs moyens de verrouillage.

Il faut enfin faire basculer les sièges arrière 51 vers l'avant, pour leur faire réaliser une simple culbute (figures 4 et 5), de telle manière que leurs crochets 61 viennent naturellement crocheter un axe 35A appartenant aux moyens de pivot 35 des sièges intermédiaire 31 (figures 9 et 12).

Les seconds moyens d'assujettissement sont alors conçus pour ramener les sièges arrière 51 contre les sièges intermédiaire 31 (figure 6), en les faisant pivoter autour de l'axe 35A, puis pour les maintenir dans cette position de stockage.

Dans les deux modes de réalisation représentés sur les figures, les seconds moyens d'assujettissement comportent à cet effet au moins une sangle 62 ; 72.

Plus précisément, dans le premier mode de réalisation représenté sur les figures 7 à 10, il est prévu deux sangles 62 identiques permettant d'arrimer chaque siège arrière 51 au siège avant 11 correspondant.

Comme le montre la figure 10 (sur laquelle la garniture du siège arrière 51 n'a pas été représentée pour laisser apparaître le cadre 55 de ce siège), chaque sangle 62 présente une extrémité fixe 63 qui est directement fixée au cadre 55 du siège arrière 51 correspondant.

Cette extrémité fixe 63 est plus précisément ici fixée à la traverse la plus basse du cadre 55 du siège arrière 51, par des moyens de vissage ou de collage.

Chaque sangle 62 fait saillie hors du siège arrière 51 correspondant, au travers d'une ouverture prévue dans la garniture de celui-ci, à proximité de l'appui-tête 56.

Une poche aumônière (non visible sur les figures) est ici prévue sous cette ouverture, sur la face arrière du dossier 53, afin de pouvoir y ranger la partie de la sangle 64 qui fait saillie hors du siège arrière 51 lorsqu'elle n'est pas utilisée.

La sangle 62 comporte par ailleurs des moyens de mise en tension. Ici, ces moyens de mise en tension comportent un mécanisme à cliquet avec levier, qui est fixé à la sangle 62 à distance de son extrémité libre 64.

La sangle 62 présente alors une longueur telle que, lorsque les sièges arrière 51 ont été crochetés sur l'axe 35A des sièges intermédiaire 31 et qu'ils sont encore couchés sur le châssis 2 (figure 5), il est possible de passer cette sangle 62 autour de l'appui-tête du siège avant 11 puis d'engager son extrémité libre 64 dans le mécanisme à cliquet.

Ainsi est-il possible de faire progressivement basculer les sièges arrière 51 vers leur position de stockage, en appui contre les sièges intermédiaire 31, en mettant en tension les sangles 62 grâce aux mécanismes à cliquet.

L'effort nécessaire pour faire pivoter les sièges arrière 51 en position de stockage est donc très réduit, si bien que le changement de configuration des sièges dans le véhicule automobile 1 s'avère particulièrement aisé.

Pour réinstaller les sièges 31, 51 en position d'utilisation, il suffit à l'inverse de desserrer progressivement les sangles 62 pour que les sièges arrière 51 rebasculent vers l'arrière.

Une poignée avantageusement située sous l'assise des sièges arrière 51 permet alors de faire culbuter facilement les sièges arrière 51 vers l'arrière, afin de pouvoir les verrouiller à nouveau sur le châssis 2 du véhicule automobile 1, en position d'utilisation.

Dans le second mode de réalisation représenté sur les figures 11 à 13, les seconds moyens d'assujettissement comportent une unique sangle 72 pour retenir les sièges arrière 51 contre les sièges intermédiaire 31.

Comme le montre la figure 11, cette sangle 72 présente deux extrémités libres 73, 74.

Une première de ses extrémités libres 74 est équipée d'un moyen de fixation pour se fixer à l'appui-tête 16 de l'un des sièges avant 11. Ce moyen de fixation peut par exemple se présenter sous la forme d'un crochet ou d'un mousqueton.

Cette sangle 72 comporte par ailleurs des moyens de mise en tension 75. Ici, ces moyens de mise en tension comportent un mécanisme à cliquet avec levier qui est fixé sur la sangle 72, à distance de sa seconde extrémité libre 73.

La sangle 72 présente alors une longueur telle que, lorsque les sièges arrière 51 ont été crochetés sur l'axe 35A des sièges intermédiaire 31 et qu'ils sont encore couchés sur le châssis 2 (figure 5), il est possible de fixer sa première extrémité libre 74 à l'appui-tête 16 de l'un des sièges avant 11, puis de passer sa seconde extrémité libre 73 derrière les appui-têtes 56 des sièges arrière 51, puis autour de l'appui-tête 16 de l'autre des sièges avant 11, et enfin dans le mécanisme à cliquet 75.

Ainsi est-il est possible de faire progressivement basculer les sièges arrière 51 vers leur position de stockage, en appui contre les sièges intermédiaire 31, en mettant en tension la sangle 72, grâce au mécanisme à cliquet 75.

Ici également, l'effort nécessaire pour faire pivoter les sièges arrière 51 en position de stockage est très réduit, si bien que le changement de configuration des sièges dans le véhicule automobile 1 s'avère particulièrement aisé.

Pour réinstaller les sièges 31, 51 en position d'utilisation, il suffit à l'inverse de desserrer progressivement la sangle 72 pour que les sièges arrière 51 rebasculent vers l'arrière, puis de faire culbuter facilement les sièges arrière 51 vers l'arrière, afin de pouvoir les verrouiller à nouveau sur le châssis 2 du véhicule automobile 1, en position d'utilisation.

Dans ce mode de réalisation, on peut prévoir de rigidifier la liaison entre les sièges arrière 51 et les sièges intermédiaire 31, pour éviter qu'en cas de retournement du véhicule automobile, les crochets 61 ne se décrochent de l'axe 35A (figure 12).

Alors, comme le montre la figure 13, on peut prévoir de renforcer les premiers moyens d'assujettissement par au moins une seconde sangle 82 entourant l'axe 54A des sièges arrière 51 et l'axe 35A des sièges intermédiaire 31.

Ici, il est prévu deux courtes sangles à boucles 82 identiques qui permettent, lorsque les sièges arrière 51 sont en position de stockage contre les sièges intermédiaire 31, de bloquer les deux axes 35A, 54A ensemble, l'un contre l'autre.

On pourrait notamment prévoir que les crochets des sièges arrière se fixent sur des axes prévus, non pas sur les sièges intermédiaire, mais plutôt sur le châssis du véhicule.

On pourrait également prévoir de remplacer les crochets des sièges arrière par des moyens de blocage autres (encliquetage, magnétique, ...) qui seraient alors préférentiellement conçus pour laisser les sièges arrière libre de basculer vers les sièges intermédiaire.

On pourrait aussi prévoir de remplacer les sangles par deux tiges métalliques rigides chacune adaptée à s'accrocher, par l'une de ses extrémités recourbées, à l'appui-tête de l'un des sièges avant, et, par l'autre de ses extrémités recourbées, à l'appui-tête de l'un des sièges arrière.

## Revendications

1. Véhicule automobile (1) comportant un châssis (2) sur lequel sont montées trois rangées (10, 30, 50) de sièges (11, 31, 51), avec :
- au moins un siège avant (11) de première rangée (10),
- au moins un siège intermédiaire (31) de seconde rangée (30) qui est adapté à être replié et qui est monté mobile sur le châssis (2) entre une position d'utilisation et une position de stockage dans laquelle il est replié et rabattu contre le siège avant (11) de première rangée (10), et
- au moins un siège arrière (51) de troisième rangée (50) qui est adapté à être replié et qui est dissociable du châssis (2),
**caractérisé en ce qu'**il comporte des moyens d'arrimage (61, 62) pour bloquer le siège arrière (51) de troisième rangée (50) contre le siège intermédiaire (31) de seconde rangée (30) lorsque le siège arrière (51) de troisième rangée (50) est replié et dissocié du châssis (2) et que le siège intermédiaire (31) de seconde rangée (30) est en position de stockage.

2. Véhicule automobile (1) selon la revendication précédente, dans lequel les moyens d'arrimage (61, 62) sont agencés pour bloquer le siège arrière (51) de troisième rangée (50) contre le siège intermédiaire (31) de seconde rangée (30) en position tête-bêche, assise (52) contre assise (32).

3. Véhicule automobile (1) selon l'une des revendications précédentes, dans lequel les moyens d'arrimage (61, 62) du siège arrière (51) de troisième rangée (50) comprennent des premiers moyens d'assujettissement (61) du siège arrière (51) de troisième rangée (50) au siège intermédiaire (31) de seconde rangée (30) et des seconds moyens d'assujettissement (62) du siège arrière (51) de troisième rangée (50) au siège avant (11) de première rangée (10).

4. Véhicule automobile (1) selon la revendication précédente, dans lequel lesdits premiers moyens d'assujettissement comportent au moins un crochet (61).

5. Véhicule automobile (1) selon la revendication précédente, dans lequel, le siège intermédiaire (31) de seconde rangée (30) et le siège arrière (51) de troisième rangée (50) comprenant chacun une assise (32, 52) et un dossier (33, 53) reliés par des moyens de charnière (34, 54), ledit crochet (61) est fixé aux moyens de charnière (54) du siège arrière (51) de troisième rangée (50) et est adapté à crocheter une partie correspondante (35) de l'assise (32) du siège intermédiaire (31) de seconde rangée (30).

6. Véhicule automobile (1) selon la revendication précédente, dans lequel le siège intermédiaire (31) de seconde rangée (30) comprenant des moyens de pivot (35) pour être rabattu en position de stockage, ladite partie correspondante de l'assise (32) du siège intermédiaire (31) de seconde rangée (30) appartient auxdits moyens de pivot (35).

7. Véhicule automobile (1) selon l'une des revendications 3 à 6, dans lequel lesdits seconds moyens d'assujettissement comportent au moins une sangle (62 ; 72).

8. Véhicule automobile (1) selon la revendication 7, dans lequel, ledit siège avant (11) de première rangée (10) étant équipé d'un appui-tête (16), ladite sangle (62) présente une extrémité fixe (63) qui est fixée au cadre (55) du siège arrière (51) de troisième rangée (50), et une extrémité libre (64) qui est adaptée à être fixée à l'appui-tête (16) du siège avant (11) de première rangée (10).

9. Véhicule automobile (1) selon la revendication 7, dans lequel, la première rangée (10) comportant deux sièges avant (11) et la troisième rangée (50) comportant deux sièges arrière (51) équipés chacun d'un appui-tête (16, 56), ladite sangle (72) présente une longueur telle qu'elle est adaptée à enceindre fermement les appui-têtes (56) des sièges arrière (51) de troisième rangée (50) lorsque ses deux extrémités sont fixées aux deux appui-têtes (16) des sièges avant (11) de première rangée (10).

10. Véhicule automobile (1) selon la revendication précédente, dans lequel, le siège arrière (51) de troisième rangée (50) comprenant une assise (52) et un dossier (53) reliés par des moyens de charnière (54) et le siège intermédiaire (31) comprenant des moyens de pivot (35) pour être rabattu en position de stockage, lesdits premiers moyens d'assujettissement comportent au moins une seconde sangle (82) qui présente une longueur telle qu'elle est adaptée à enceindre fermement la charnière (54) du siège arrière (51) de troisième rangée (50) et une partie des moyens de pivot (35) du siège intermédiaire (31) de seconde rangée (30) pour les bloquer ensemble.

## Patentansprüche

1. Kraftfahrzeug (1), das ein Chassis (2) aufweist, auf das drei Reihen (10, 30, 50) von Sitzen (11, 31, 51) montiert sind, mit:
- mindestens einem Vordersitz (11) einer ersten Reihe (10),
- mindestens einem Zwischensitz (31) einer zweiten Reihe (30), der geeignet ist, zusammengeklappt zu werden, und der zwischen einer Benutzungsstellung und einer Verstaustellung beweglich auf das Chassis (2) montiert ist, in der er zusammengeklappt und gegen den Vordersitz (11) der ersten Reihe (10) geklappt wird, und
- mindestens einen Rücksitz (51) einer dritten Reihe (50), der geeignet ist, zusammengeklappt zu werden, und der vom Chassis (2) trennbar ist,
**dadurch gekennzeichnet, dass** es Kopplungseinrichtungen (61, 62) aufweist, um den Rücksitz (51) der dritten Reihe (50) gegen den Zwischensitz (31) der zweiten Reihe (30) zu arretieren, wenn der Rücksitz (51) der dritten Reihe (50) zusammengeklappt und vom Chassis (2) getrennt ist, und wenn der Zwischensitz (31) der zweiten Reihe (30) in der Verstaustellung ist.

2. Kraftfahrzeug (1) nach dem vorhergehenden Anspruch, wobei die Kopplungseinrichtungen (61, 62) eingerichtet sind, um den Rücksitz (51) der dritten Reihe (50) gegen den Zwischensitz (31) der zweiten Reihe (30) in Kopf-bei-Fuß-Stellung, Sitzfläche (52) gegen Sitzfläche (32), zu arretieren.

3. Kraftfahrzeug (1) nach einem der vorhergehenden Ansprüche, wobei die Kopplungseinrichtungen (61, 62) des Rücksitzes (51) der dritten Reihe (50) erste Befestigungseinrichtungen (61) des Rücksitzes (51) der dritten Reihe (50) am Zwischensitz (31) der zweiten Reihe (30) und zweite Befestigungseinrichtungen (62) des Rücksitzes (51) der dritten Reihe (50) am Vordersitz (11) der ersten Reihe (10) enthalten.

4. Kraftfahrzeug (1) nach dem vorhergehenden Anspruch, wobei die ersten Befestigungseinrichtungen mindestens einen Haken (61) aufweisen.

5. Kraftfahrzeug (1) nach dem vorhergehenden Anspruch, wobei, da der Zwischensitz (31) der zweiten Reihe (30) und der Rücksitz (51) der dritten Reihe (50) je eine Sitzfläche (32, 52) und eine Rückenlehne (33, 53) aufweisen, die durch Scharniereinrichtungen (34, 54) verbunden sind, der Haken (61) an den Scharniereinrichtungen (54) des Rücksitzes (51) der dritten Reihe (50) fixiert und geeignet ist, sich auf einen entsprechenden Teil (35) der Sitzfläche (32) des Zwischensitzes (31) der zweiten Reihe (30) einzuhaken.

6. Kraftfahrzeug (1) nach dem vorhergehenden Anspruch, wobei, da der Zwischensitz (31) der zweiten Reihe (30) Drehzapfeneinrichtungen (35) enthält, um in die Verstaustellung geklappt zu werden, der entsprechende Teil der Sitzfläche (32) des Zwischensitzes (31) der zweiten Reihe (30) zu den Drehzapfeneinrichtungen (35) gehört.

7. Kraftfahrzeug (1) nach einem der Ansprüche 3 bis 6, wobei die zweiten Befestigungseinrichtungen mindestens einen Gurt (62; 72) aufweisen.

8. Kraftfahrzeug (1) nach Anspruch 7, wobei, da der Vordersitz (11) der ersten Reihe (10) mit einer Kopfstütze (16) ausgestattet ist, der Gurt (62) ein ortsfestes Ende (63), das am Rahmen (55) des Rücksitzes (51) der dritten Reihe (50) fixiert ist, und ein freies Ende (64) aufweist, das geeignet ist, an der Kopfstütze (16) des Vordersitzes (11) der ersten Reihe (10) fixiert zu werden.

9. Kraftfahrzeug (1) nach Anspruch 7, wobei, da die erste Reihe (10) zwei Vordersitze (11) und die dritte Reihe (50) zwei Rücksitze (51) aufweist, die je mit einer Kopfstütze (16, 56) ausgestattet sind, der Gurt (72) eine solche Länge hat, dass er geeignet ist, die Kopfstützen (56) der Rücksitze (51) der dritten Reihe (50) fest zu umgeben, wenn seine zwei Enden an den zwei Kopfstützen (16) der Vordersitze (11) der ersten Reihe (10) fixiert sind.

10. Kraftfahrzeug (1) nach dem vorhergehenden Anspruch, wobei, da der Rücksitz (51) der dritten Reihe (50) eine Sitzfläche (52) und eine Rückenlehne (53) aufweist, die durch Scharniereinrichtungen (54) verbunden sind, und der Zwischensitz (31) Drehzapfeneinrichtungen (35) enthält, um in die Verstaustellung geklappt zu werden, die ersten Befestigungseinrichtungen mindestens einen zweiten Gurt (82) aufweisen, der eine solche Länge hat, dass er geeignet ist, das Scharnier (54) des Rücksitzes (51) der dritten Reihe (50) und einen Teil der Drehzapfeneinrichtungen (35) des Zwischensitzes (31) der zweiten Reihe (30) fest zu umgeben, um sie zusammen zu arretieren.

## Claims

1. Motor vehicle (1) including a chassis (2) on which are mounted three rows (10, 30, 50) of seats (11, 31, 51) with:
- at least one front seat (11) in the first row (10),
- at least one intermediate seat (31) in the second row (30) that is adapted to be folded up and is mounted to be mobile on the chassis (2) between a position of use and a stowed position in which it is folded up and folded against the front seat (11) in the first row (10), and
- at least one rear seat (51) in the third row (50) that is adapted to be folded up and can be separated from the chassis (2),
**characterized in that** it includes securing means (61, 62) for locking the rear seat (51) in the third row (50) against the intermediate seat (31) in the second row (30) when the rear seat (51) in the third row (50) is folded up and separated from the chassis (2) and the intermediate seat (31) in the second row (30) is in the stowed position.

2. Motor vehicle (1) according to the preceding claim, wherein the securing means (61, 62) are adapted to lock the rear seat (51) in the third row (50) against the intermediate seat (31) in the second row (30) in a head-to-tail position, seat cushion (52) against seat cushion (32).

3. Motor vehicle (1) according to either of the preceding claims, wherein the securing means (61, 62) of the rear seat (51) in the third row (50) comprise first coupling means (61) for coupling the rear seat (51) in the third row (50) to the intermediate seat (31) in the second row (30) and second coupling means (62) for coupling the rear seat (51) in the third row (50) to the front seat (11) in the first row (10).

4. Motor vehicle (1) according to the preceding claim, wherein said first coupling means include at least one hook (61).

5. Motor vehicle (1) according to the preceding claim, wherein, the intermediate seat (31) in the second row (30) and the rear seat (51) in the third row (50) each comprising a seat cushion (32, 52) and a backrest (33, 53) connected by hinge means (34, 54), said hook (61) is fixed to the hinge means (54) of the rear seat (51) in the third row (50) and is adapted to hook onto a corresponding part (35) of the seat cushion (32) of the intermediate seat (31) in the second row (30).

6. Motor vehicle (1) according to the preceding claim, wherein, the intermediate seat (31) in the second row (30) comprising pivot means (35) so that it can be folded into the stowed position, said corresponding part of the seat cushion (32) of the intermediate seat (31) in the second row (30) is part of said pivot means (35).

7. Motor vehicle (1) according to any one of Claims 3 to 6, wherein said second coupling means include at least one strap (62; 72).

8. Motor vehicle (1) according to Claim 7, wherein, said front seat (11) in the first row (10) being equipped with a headrest (16), said strap (62) has a fixed end (63) that is fixed to the frame (55) of the rear seat (51) in the third row (50) and a free end (64) that is adapted to be fixed to the headrest (16) of the front seat (11) in the first row (10).

9. Motor vehicle (1) according to Claim 7, wherein, the first row (10) including two front seats (11) and the third row (50) including two rear seats (51) each equipped with a headrest (16, 56), said strap (72) has a length such that it is adapted to encircle firmly the headrests (56) of the rear seats (51) in the third row (50) when its two ends are fixed to the two headrests (16) of the front seats (11) in the first row (10).

10. Motor vehicle (1) according to the preceding claim, wherein, the rear seat (51) in the third row (50) comprising a seat cushion (52) and a backrest (53) connected by hinge means (54) and the intermediate seat (31) comprising pivot means (35) so that it can be folded into the stowed position, said first coupling means include at least one second strap (82) that has a length such that it is adapted to encircle firmly the hinge (54) of the rear seat (51) in the third row (50) and part of the pivot means (35) of the intermediate seat (31) in the second row (30) to lock them together.
